# EUROPEAN PATENT SPECIFICATION

(11) **EP 1 260 078 B1**
(45) Date of publication and mention of the grant of the patent: **10.01.2007**
(21) Application number: 01905908.8
(22) Date of filing: 16.02.2001
(51) Int. Cl.: H04L 29/06

(54) **DATA TRANSFER METHOD AND APPARATUS**
DATENÜBERTRAGUNGSVERFAHREN UND VORRICHTUNG
PROCEDE ET APPAREIL DE TRANSFERT DE DONNEES

(30) Priority: 01.03.2000 EP 00301648
(43) Date of publication of application: 27.11.2002
(73) Proprietor: BRITISH TELECOMMUNICATIONS public limited company, London EC1A 7AJ (GB)
(72) Inventor: POWER, Mark Philip James, Nacton, Suffolk IP10 0HX (GB)
(74) Representative: Nash, Roger William
(86) International application number: PCT/GB2001/000662
(87) International publication number: WO 2001/065801

(56) References cited:
- FR-A- 2 770 719
- US-A- 6 021 426

## Description

The present invention relates to the transfer of data between computers over a communications link and/or network. In particular the invention relates to the transfer of data from a server computer to a client computer in a client/server environment, for example when a client computer is used in combination with a web browser to view web pages resident on the server computer.

One mechanism by which interaction in web pages is commonly provided is using a software system called Java. Java can provide a system of programs that reside on the client computer and provide a secure execution environment (called the Java Virtual Machine (JVM)) on the client computer which is separate from the normal execution environment of the client computer (for example Windows). Most web browsers are compatible with Java, i.e. browsers have the functionality to provide a JVM to run downloaded programs called Java Applets. Java Applets provide many types of functionality such as screen animation and other display features including on-screen forms and tables for data display, input and elicitation. For example, an Applet could be used to carry out periodic database queries and present the results of the query to the user. The database could hold share price information that is frequently changing and requires presenting to a user at regular intervals.

However, one problem with the Java solution is that web pages that include Java Applets generally take longer to download than standard web pages. Furthermore, the JVM takes time to start-up before it can run an Applet and requires more processing power than is needed to run the browser alone. These drawbacks become more significant when the client computer is of restricted processing power or is linked to the server computer by a low bandwidth network connection.

An alternative to the Java approach is to use Client Pull and/or Server Push CGI techniques as described in detail in "CGI Programming on the World Wide Web" by Shishir Gundavaram (Published by O'Reilly & Associates, USA). The simpler of the two techniques is Client Pull which can, for example, be used to provide an updating mechanism for information on a web page by associating the page with a CGI script.

A CGI script is a program that is resident on the server that starts working in response to a request from a client computer for the associated web page. The CGI script can be used to carry out a database query and insert the results into the web page which is then downloaded to the requesting client.

The Client Pull and Server Push techniques can be combined with a browser feature referred to as frames which most browsers provide. This feature allows the browser window to be split into distinct areas each referred to as a frame and each having the properties of a normal browser window. The user interaction that occurs in one frame can be independent of both the content and user interaction of other frames. Frames can be visible or invisible i.e. displayed or not displayed on the screen.

Web pages can also have a feature called a refresh tag which causes the browser displaying the page to repeatedly download the page at predetermined intervals defined by the tag. Refresh tags enable information on a web page to be automatically updated (i.e. without user intervention) while being viewed. The process typically has the following steps:
a) the server receives a page request (resulting from a user request);
b) the server runs the CGI script associated with the requested page, perhaps enters new data into the page as a result and then sends the updated page to the client that requested it along with a refresh tag;
c) the client computer displays the received page and starts a timer corresponding to the refresh tag; and
d) when the refresh time is up, the client automatically repeats its request to the server for the page (or a different one) and the process starts again at step a).

The second of the techniques, Server Push, works in a similar manner to Client pull except that the server outputs a multiple part message to the client, each part of which can contain a page with information updated using a CGI script. Again, a timer can be used to start the CGI script or alternatively the script can be run only when the data to be displayed in the page has been updated. The main difference is that the network connection between the client and sever in a Server Push mechanism is kept open for the duration of the client/server interaction for that page. One problem with the Client Pull and Server Push mechanisms noted above is that each time the page being viewed is updated, the page is redisplayed and therefore the page (or screen) is seen by the user to flicker. This makes studying the page for any length of time uncomfortable for a user. Furthermore, if the refresh rate for the page is high (e.g. every few seconds) then the flicker effect is uncomfortable even for limited viewing of the page. In order to reduce the flicker frequency the refresh rate of the page can be reduced but in situations where changes in the data presented by the page have to be reacted to promptly this may not be feasible.

US-A-6 021 426 describes a system in which a resource such as a web-page to be viewed on a client device is split into a static part and a dynamic part. The static part includes instructions about how the dynamic part is to be combined with the static part to form the complete web-page and is cached by the client device. The dynamic part is regularly sent to the client device which combines the dynamic portion with the static portion to generate a complete web-page which is then displayed on the client device. The document does not explain how the combining is performed other than to mention that an extension to HTML is required to provide the functionality. In addition, the document states "The client then has the burden of combining the static and dynamic portions of the resource ... so that the entire resource may be viewed by the client."

FR-A- 2 770 719 describes a process for communicating an image (especially a bouquet of flowers) comprising a composition of basic objects (especially flowers) from a server terminal to a user terminal provided with a common database of referenced images of basic objects. References of the basic objects comprising the composition to be communicated are transmitted by the server and the image of the composition is (re-)constructed at the user terminal by selecting from the database the referenced images and arranging them into a composition.

According to an aspect of the present invention, there is provided a method for providing data from a data source to a destination apparatus over a communications link or network, said data comprising:
a graphical element having one or more updatable areas; and
one or more updateable elements corresponding to the updateable areas; said method comprising the steps of:
   in response to a request for data from the destination apparatus, transmitting the graphical element, at least one updateable element and a control program for controlling updating of the updateable areas, of the graphical element when displayed, using the updateable elements; and
   transmitting one or more updated elements.

Splitting a page to be displayed into two pages, one being static and displayed the other being dynamic and not displayed means that only the changing data, i.e. the dynamic page, has to be refreshed. Also, because only the data within the static page is redisplayed, the redisplay of the whole page is avoided. These features alleviate problems of the prior art by reducing flicker, reducing the amount of data that has to be downloaded and/or reducing the amount of processing required at the client and/or server computers.

Embodiments of the invention are described below with reference the accompanying figures in which:
figure 1 is a schematic diagram showing a plurality of client devices connected to a server device via a network such as the internet;
figures 2a and 2b are diagrammatic representations of the pages and data stored on the sever device of figure 1 containing parts to be displayed on the client device of figure 1;
figure 3 is a process diagram of the processing and display of the pages of figure 2 according to a first embodiment of the invention;
figure 4 is a process diagram of the processing and display of the pages of figure 2 according to a second embodiment of the invention; and
figure 5 is a diagrammatic representation of pages and data stored on the sever device of figure 1 containing parts to be displayed on the client device of figure 1 in accordance with a third embodiment of the present invention;

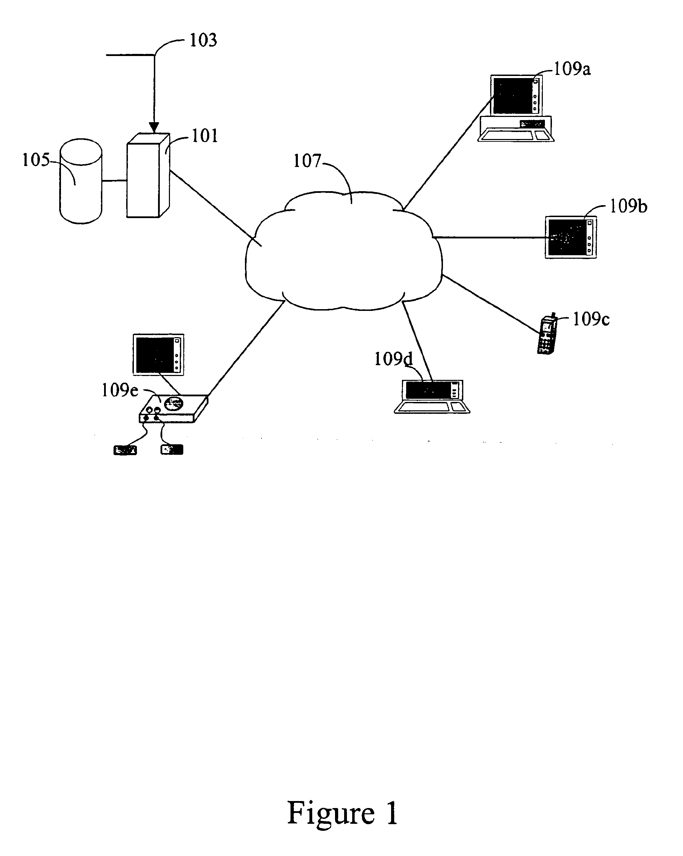

With reference to figure 1, a server computer 101 is fed with data via a data feed 103 and is arranged to process the data and store the results in a database 105. The data feed 103 provides, for example, test data produced automatically from a telecommunications network or financial information such as exchange rates between a plurality of currencies. In either case the data is such that it changes relatively frequently.

The sever 101 is also connected to a network 107 such as the internet or an intranet, to which network 107 a plurality of client devices 109 are also connected such as a personal computer 109a, a digital television 109b, a mobile telephone 109c, a personal digital assistant 109d or a games console 109e. The server computer 101 is arranged with suitable server software to communicate over the network 107 with each of the client devices 109 and each client device 109 is arranged with corresponding software so as to be able to communicate with the server computer 101 over the network 107.

The server 101, in this embodiment is an IBM RS/6000 J50 computer with server software installed called Hyper Text Transport Protocol Daemon (Httpd) from Apache Software Inc or alternatively Oracle Web Server from Oracle Corporation. Each of the client devices 109 is installed with a suitable web browser. In the case for the personal computer 109 the web browser could be Netscape from Netscape Inc or Explorer from Microsoft Corp.. Others of the client devices 109 are installed with suitable types of client software arranged to provide network access and browsing which depend on the particular device and method of connection to the network 107.

The Httpd or Oracle Web Server (OWS) software when running on the server computer 101 is capable of sending files to the client devices 109 and to run programs on the server 101 in response to a request from a browser running on one of the client devices 109. If the server software receives a request for a plain file such as an HTML file (Hyper Text Markup Language - a format commonly used for web pages), then the server software looks up the file in the server 101 directory system and sends the file across the network 107 to the requesting browser. Such an HTML file can be referred to as a static page.

The server 101 may also receive a request to run a process using server application software such as a query on the database 105 via a server database application. In this case an interface mechanism called the Common Gateway Interface (CGI) is used to manage communication between the Httpd or OWS software and the server application software. The CGI mechanism is arranged to take parameters from the incoming process request, pass them to the server application software and to return the results of the process request to the requesting browser. The results returned to the browser can be referred to as a dynamic page because the content of the page can be changed from time to time.

In the present embodiment, the server 101 uses the CGI mechanism to interface with a database application which processes incoming data from the data feed 103 and stores the results in the database 105. In this embodiment the data relates to the status(es) of alarms which are used to alert engineers to faults occurring in a telecommunications network.

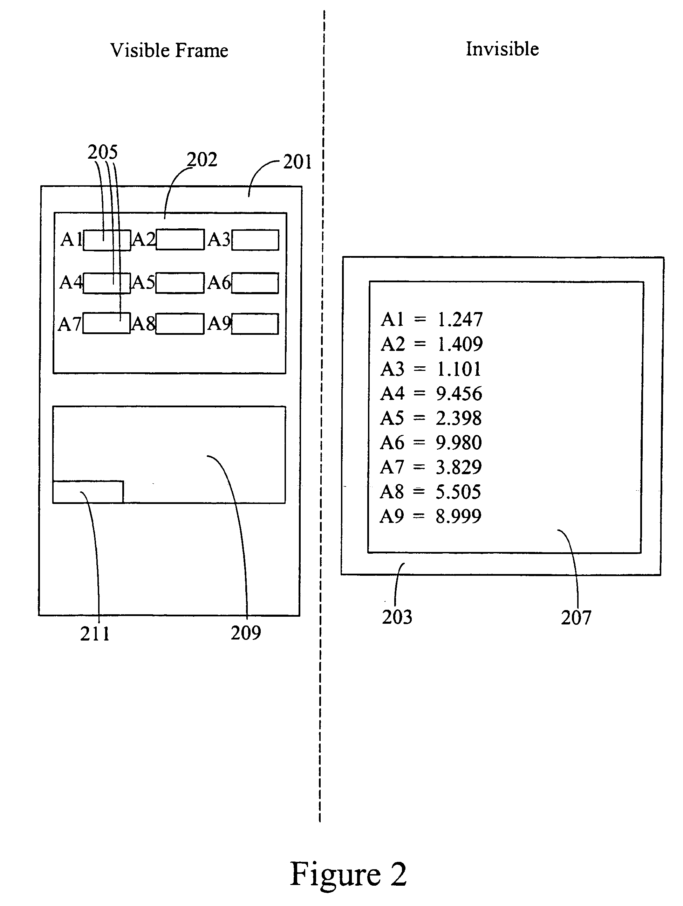

With reference to figure 2, the data in the database 105 is presented to the user using two pages - a static page 201 and a dynamic page 203. The static page 201 is set out as an HTML form 202 containing a plurality of labelled boxes 205 each of which is blank. A form is a standard HTML function which is commonly used for obtaining input i.e. used to allow a user to enter data for transmission back to the server 101. The static page 201 also contains a script 209 which, in this embodiment, is written using the JavaScript language (as will be appreciated by those skilled in the art JavaScript is distinct from Java). The form 202 is the part of the static page 201 that is actually displayed on the client while the script 209 is not intended for display and so is normally invisible.

The dynamic page 203 comprises no visible part i.e. the page is not displayed on the browser. Instead, the dynamic page 203 comprises data structure 207 having a plurality of elements that correspond to the boxes 205 of the form 202 in the static page 201. The data structure 207 in this embodiment is a JavaScript array.

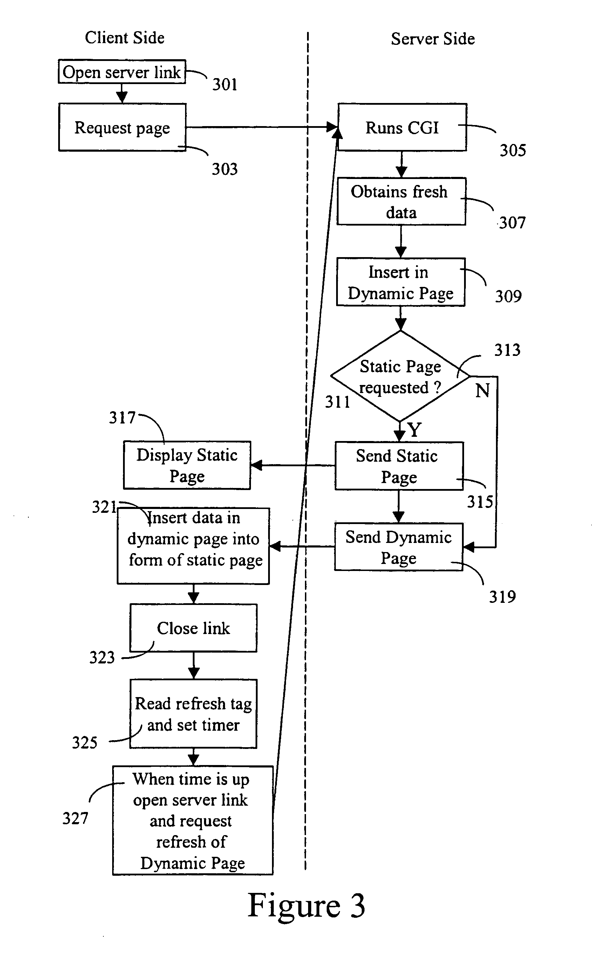

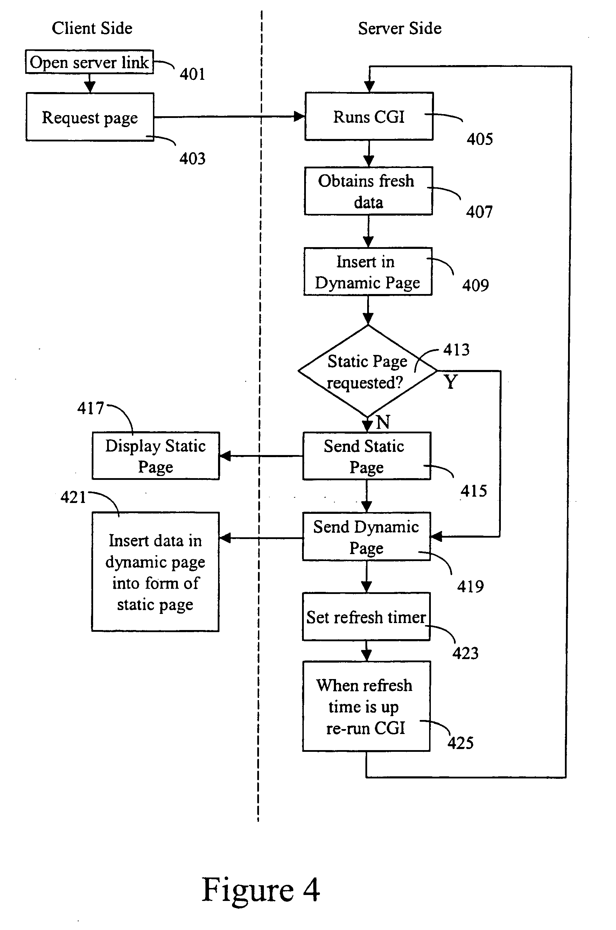

When a browser downloads the static page 201 it firstly displays the form 202 and then runs the script 209. The script 209 is arranged to load the dynamic page 203 into an invisible frame, extract the data from its data structure 207 and insert the data into the appropriated parts of the form 202. The script 209 includes a refresh tag 211 that at predetermined intervals causes a request for a refreshed dynamic page 203 to be sent to the server 101. The server 101 has a CGI script (not shown) which is arranged, in response to a request from the browser, to access the database 105 to obtain the latest alarm status data and to populate the array 207 in the dynamic page 203 with that fresh data. These processes are explained in further detail below with reference to figures 3 and 4.

Figure 3 shows a flow diagram of the processing in accordance with the first embodiment of the pages 201, 203 by the client 109 and the server 101 in response to a client 109 user's request to view the alarm status page 201, 203. At step 301, in response to the user making the request (by entering the URL (Universal Resource Locator) of the page 201, 203 or using a hyperlink), the client opens up a link via the network 107 to the server 101. At step 303 the client 109 sends the request for the alarm status page 201,203. In response to the request, the server, at step 305, runs the CGI script associated with the alarm status page 201, 203 and at step 307 receives the fresh data from the database 105. The fresh data is inserted into the data structure 207 of the dynamic page 203 at step 309.

At step 313, if the request in step 303 was for the whole page (i.e. included the static page 201) then the processing moves on to step 315 and sends the static page 201 to the client 109. At step 317, the client 109 displays the static page 201 to the user in a browser window. Next, at step 319, the server sends the dynamic page 203 to the client which, under the control of the script 209, extracts the refreshed data from the dynamic page 203 and inserts it into the corresponding fields 205 of the displayed static page 201.

At step 323, the client then closes the link over the network 107 to the server 101 and at step 325 sets a timer corresponding to the refresh tag 211. Unless the user views a different page while the timer is running then when the allotted time has elapsed the client 109 checks that the alarm status page 201, 203 is still being viewed and if so, at step 327, opens a link to the server 101 and requests a refreshed dynamic page 203.

In response to the request the server re-runs the CGI script at step 305 and carries out steps 307 and 309 as noted above. At step 313, the fact that the request is a refresh request results in the processing moving to step 319 and the sending of the refreshed dynamic page 203 to the client. At step 321, the client processes the new refreshed data from the dynamic page as noted above and continues to steps 323, 325 and 327. The process of refreshing the data in the static page 201 with data from the dynamic page 203 will continue until the user chooses a different page to view via the browser on the client 109.

Figure 4 shows a flow diagram of the processing in accordance with the second embodiment of the invention of the pages 201, 203 by the client 109 and the server 101 in response to a client 109 user's request to view the alarm status page 201, 203. At step 401, in response to the user making a request, the client 109 opens up a link via the network 107 to the server 101. At step 403 the client 109 sends the request for the alarm status page 201,203. In response to the request, the server, at step 405, runs the CGI script associated with the alarm status page 201, 203 and at step 407 receives the fresh data from the database 105. The fresh data is inserted into the dynamic page 203 at step 409.

At step 413, if the request in step 403 was for the whole page (i.e. included the static page 201) then the processing moves on to step 415 and sends the static page 201 to the client 109. At step 417, the client 109 displays the static page 201 to the user in a browser window. Next, at step 419, the server sends the dynamic page 203 to the client which, under the control of the script 209, extracts the data from the dynamic page 203 and inserts the data into the appropriate fields 205 in the form 202 of the static page 201.

At step 423 the server 101 monitors the data for the dynamic page 203 for any updates. When an update to the data is detected the processing moves to step 405 and the server re-runs the CGI script and carries out steps 407 and 409 as described above. In other words, rather than being driven by a refresh timer, the refreshing of the dynamic page 203 in this embodiment is driven by the data to be displayed.

At step 413, the fact that only the dynamic page 203 is being updated results in the processing moving to step 419 and the sending of the refreshed dynamic page 203 to the client 109. At step 421, the client 109 extracts the refreshed data from the dynamic page 203 and inserts it into the appropriate fields 205 of the static page 201 and the server 101 continues to steps 423 and 425 as described above. The process of refreshing the dynamic page 203 will continue until the user chooses a different page to view via the browser on the client 109.

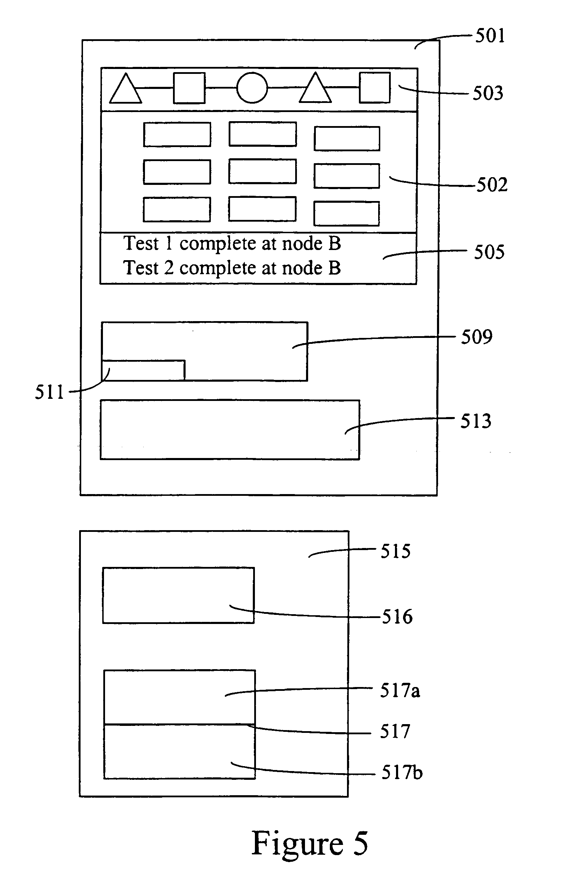

Figure 5 shows a third embodiment of the invention in which, a static page 501 comprises a form 502 which is the same as the form 202 described above with reference to figure 2. In addition, the static page 501 comprises a set of symbols 503 that provide a schematic representation of elements in the network from which the alarms being monitored are derived. Each symbol has two states each of which indicate to the viewer the status of the network element that a given symbol represents e.g. a red symbol for an element with an alarm condition and a black symbol for and element that is operating normally. The static page 501 also includes a dialog box 505 that is used to provide the viewer with text messages describing, for example, the progress of a task such as a test routine being carried out remotely in the network.

The static page 501 also includes a script 509 a refresh tag 511 and data 513. The script 509 functions in substantially the same manner as the script 209 described above with reference to figures 2 and 3 or 4 (the differences will be described below). The data 513 comprises two parts, the first being a set of images each of which represent one of the two possible states of each of the symbols 503. The second part is sets of text messages, each set forming an ordered sequence arranged to provide the dialog for the dialog box 505. The set of text messages are designed to provide dialog for all of the tasks that a user would need to be informed about. As with the previous embodiments, the script, 509 is not displayed and in a similar manner, in this embodiment, the data 513 is stored by the browser until needed as described below.

The dynamic page 515 comprises a data structure 517 which, in addition to the data 516 for the form 502 also holds instructions 517a relating to the symbols 503 and instructions 517b relating to the text messages for the dialog box 505. The instructions 517a provide an indication of which of the two possible representations of each symbol (indicating one of the two states of the network element that the symbol is representing) should be displayed. The instructions 517b provide an indication of which of the sequence of messages should next be displayed in the dialog box 505.

In this embodiment, the script 509 differs from the script described with reference to figure 3 in that, as well as extracting data 516 from the database 105 that will eventually displayed in the form 502, the instructions 517a and 517b are also extracted and inserted into the dynamic page 515. When the browser receives the data 516, it deals with it in the same manner as for the first and second embodiments above. When the browser receives the instructions 517a, 517b it applies the instructions to the symbols 503 and the dialog box 505 respectively. For example, if one of the instructions 517a indicates that one of the symbols 503 should change state (e.g. from black to red - indicating a fault at the corresponding network element) then the script accesses the stored images 513 from the static page 501, obtains the alternative image in accordance with the instruction 517a and displays it in the static page 501 in place of the previous image. Similarly, if one of the instructions 517b indicates that the next message in the sequence of messages being displayed in the dialog box 505 should be displayed then the script 509 will obtain the next message from the stored sets of messages 513 and displays the message in the dialog box 505.

As will be understood by those skilled in the art, the instructions 517a, 517b that are inserted into the dynamic page 515 can be a full set that define the state of the symbols 503 and the text in the dialog box 505. Alternatively, after the initial download i.e. for subsequent refreshing of the data in the static page 501, the instructions 517a, 517b could be a minimal set i.e. only include instructions relating to symbols that have changed status or dialog that has moves to the next message in the sequence. In this manner, the amount of processing required to produce the dynamic page 525 and to process the instructions is reduced.

Many browsers support a feature referred to as frames. This means that the browser window can be split into distinct areas each referred to as a frame and each having the properties of a normal browser window. The user interaction that occurs in one frame can be independent of both the content and user interaction of other frames. In the above embodiment, instead of displaying the static page 501 as a single page it could be split into a plurality of frames. For example, the symbols 503 could be displayed in one frame, the dialog box 505 displayed in another frame and the form 502 displayed in a further frame.

As will be understood by those skilled in the art, the static page 501 could be arranged without the symbols 503 or without the dialog box 505. Alternatively, the static page 501 could be arranged without the form 502.

As an alternative additional feature in the first embodiment, the server 101 is provided with a second refresh timer which controls the refreshing of the dynamic page 203. The second timer has a shorter time period than the first timer on the client 109. The first timer on the client 109 is used to only to stimulate the upload of the dynamic page 203 (as the refreshing of the dynamic page is now controlled by the second server side timer). This feature can be used to ensure that the server is not running the CGI script more often than the database 105 is updated or that the CGI script is run so frequently that the processing power of the server 101 is not used efficiently.

In the first and second embodiments described above, the refresh tag is associated with the static page 203. As an alternative, the tag could be associated with the dynamic page 201 and each time the dynamic page 203 is refreshed the tag 211 could be varied under the control of the client 109 or the server 101 so as to be dependant on the bandwidth/transmission rate available across the network 107. The bandwidth available may depend on the traffic load on the network 107 or the mode of connection between the client and the network e.g. PSTN, ISDN, ADSL, GSM (or other mobile system). As a further alternative, the refresh tag 211 could be dependent on the data that is inserted into the dynamic page or vary with respect to time in accordance with a predetermined function. The tag could be set by and under the control of the user.

As will be understood by those skilled in the art, the static and dynamic pages described above could be stored and created separately on separate servers. Furthermore, the static and dynamic pages could be uploaded to an intermediate server arranged to assemble the page into its display form and then allow client apparatus to access the page and display it.

As will be understood by those skilled in the art, any or all of the software used to implement the invention can be contained on various transmission and/or storage mediums such as a floppy disc, CD-ROM, or magnetic tape so that the program can be loaded onto one or more general purpose computers or could be downloaded over a computer network using a suitable transmission medium.

Unless the context clearly requires otherwise, throughout the description and the claims, the words "comprise", "comprising" and the like are to be construed in an inclusive as opposed to an exclusive or exhaustive sense; that is to say, in the sense of "including, but not limited to".

## Claims

1. A method for acquiring data from a data source (101, 105) over a communications link or network (107), said data comprising:
a graphical element (202) having one or more updatable areas (205); and
one or more updateable elements (207) corresponding to the updateable areas (205);
said method comprising the steps of:
requesting the data from the data source (101, 105);
receiving the graphical element (202), at least one updateable element (207) and a control program (209) for controlling updating of the updateable areas (205) of the graphical element (202) when displayed;
displaying the graphical element (202);
acquiring one or more updated elements (207); and
under control of the control program (209), updating the updateable areas (205) of the displayed graphical element (202) using the corresponding updated elements (207).

2. A method for providing data from a data source (101, 105) to a destination apparatus (1 09a-e) over a communications link or network (107), said data comprising:
a graphical element (202) having one or more updatable areas (205); and
one or more updateable elements (207) corresponding to the updateable areas (205);
said method comprising the steps of:
in response to a request for data from the destination apparatus (109a-e), transmitting the graphical element (202), at least one updateable element (207) and a control program (209) for controlling updating of the updateable areas (205), of the graphical element when displayed, using the updateable elements; and
transmitting one or more updated elements (207).

3. A method according to claim 1, where the updateable elements (207) comprise data elements (207), and the step of updating the updateable areas (205) of the displayed graphical element (202) comprises entering the data elements (207) into the corresponding updateable areas (205).

4. A method according to any preceding claim, where:
the data further comprises at least one set of alternative graphical sub-elements (503);
the updateable elements (516, 517a,b)) comprise one or more sub-element instructions (517a) identifying at least one graphical sub-element, from the or one of the at least one set of alternative graphical sub-elements (513), to be displayed in an area of the graphical element (502); and
the step of updating the updateable areas (505) of the displayed graphical element (502) comprises displaying in accordance with the updated sub-element instructions (517a) the or each appropriate graphical sub-element (513) in the or each corresponding area of the displayed graphical element (502).

5. A system for transmitting data over a communication link or network, the system comprising a first apparatus (101, 105) and a second apparatus (109a-e) interconnected by the communications link or network (107), said data comprising:
a graphical element (202) having one or more updatable areas (205); and
one or more updateable elements (207) corresponding to the updateable areas (205);
said first apparatus (101, 105) comprising:
means operable in response to a request from the second apparatus (109a-e), to transmit to the second apparatus the graphical element (202), at least one updateable element (207) and a control program (209) for controlling updating of the updateable areas (205), of the graphical element when displayed, using the updateable elements (207); and
means operable to further transmit one or more updated elements (207) to the second apparatus (109a-e),
said second apparatus (1 09a-e) comprising:
means operable to request data from the first apparatus (101, 105);
means operable to receive data from the first apparatus (101, 105) and to display the graphical element (202) using the updateable elements (207);
means operable to receive one or more updated elements (207); and
means operable, under the control of the control program (209), to update the updateable areas (205), of the graphical element (202) when displayed, using the updated elements (207).

6. A system according to claim 5, where the updateable elements (207) comprise data elements (207), and the updating means, operable to update the updateable areas (205), comprises means for entering the data elements into the corresponding updateable areas.

7. A system according to claim 5 or 6, where:
the data further comprises at least one set of alternative graphical sub-elements (503);
the updateable elements (516, 517a,b) comprise one or more sub-element instructions (517a) identifying at least one graphical sub-element (503), from the or one of the at least one set of alternative graphical sub-elements (503), to be displayed in an area of the graphical element; and
the updating means, operable to update the updateable areas (505), comprises means for displaying, in accordance with the updated sub-element instructions (517a) the or each appropriate graphical sub-element (503) in the corresponding area (505) of the displayed graphical element (502).

8. A client device (109a-e) for acquiring data from a data source (101, 105) over a communications link or network (107), said data comprising:
a graphical element (202) having one or more updatable areas (205); and
one or more updateable elements (207) corresponding to the updateable areas (205);
said client device (109a-e) comprising:
means for requesting the data from the data source (101, 105);
means for receiving the graphical element (202), at least one updateable element (207) and a control program (209) for controlling updating of the updateable areas (205) of the graphical element (202) when displayed;
means for displaying the graphical element (202);
means for acquiring one or more updated elements (207); and
updating means for, under control of the control program (209), updating the updateable areas (205) of the displayed graphical element (202) using the corresponding updated elements (207).

9. A data server device (101, 105) for providing data from a data source (101, 105) to a destination apparatus (109a-e) over a communications link or network (107), said data comprising:
a graphical element (202) having one or more updatable areas (205); and
one or more updateable elements (207) corresponding to the updateable areas; said data server device (101, 105) comprising:
transmitting means for, in response to a request for data from the destination apparatus (109a-e), transmitting the graphical element (202), at least one updateable element (207) and a control program (209) for controlling updating of the updateable areas, of the graphical element when displayed, using the updateable elements; wherein
the transmitting means is further operable to transmit one or more updated elements (207).

10. A storage medium carrying computer readable code representing instructions for causing a computer to perform the method defined in any of claims 1 to 4, when the instructions are executed by the computer.

11. A computer data signal embodied in a carrier wave and representing instructions for causing a computer to perform the method defined in any of claims 1 to 4, when the instructions are executed by the computer.

## Patentansprüche

1. Verfahren zum Akquirieren von Daten von einer Datenquelle (101, 105) über eine Kommunikationsverbindung oder ein Netzwerk (107), wobei die Daten aufweisen:
ein graphisches Element (202) mit einem oder mehreren aktualisierbaren Bereich(en) (205); und
ein oder mehrere aktualisierbare(s) Element(e) (207), das/die den aktualisierbaren Bereichen (205) entspricht/ entsprechen;
wobei das Verfahren die Schritte aufweist:
Anfordern der Daten von der Datenquelle (101, 105);
Empfangen des graphischen Elements (202), zumindest eines aktualisierbaren Elements (207) und eines Steuerungsprogramms (209) zum Steuern der Aktualisierung der aktualisierbaren Bereiche (205) des graphischen Elements (202), wenn angezeigt;
Anzeigen des graphischen Elements (202);
Akquirieren eines aktualisierten Elements oder der mehrerer aktualisierter Elemente (207); und
unter Steuerung des Steuerungsprogramms (209) Aktualisieren der aktualisierbaren Bereiche (205) des angezeigten graphischen Elements (202) unter Verwendung der entsprechenden aktualisierten Elemente (207).

2. Verfahren zum Liefern von Daten von einer Datenquelle (101, 105) an eine Zielvorrichtung (109a-e) über eine Kommunikationsverbindung oder ein Netzwerk (107), wobei die Daten aufweisen:
ein graphisches Element (202) mit einem oder mehreren aktualisierbaren Bereich(en) (205); und
ein oder mehrere aktualisierbare(s) Element(e) (207), das/die den aktualisierbaren Bereichen (205) entspricht/entsprechen;
wobei das Verfahren die Schritte aufweist:
als Antwort auf eine Datenanforderung von der Zielvorrichtung (109a-e) Übertragen des graphischen Elements (202), zumindest eines aktualisierbaren Elements (207) und eines Steuerungsprogramms (209) zum Steuern der Aktualisierung der aktualisierbaren Bereiche (205) des graphischen Elements (202), wenn angezeigt, unter Verwendung der aktualisierbaren Elemente; und
Übertragen eines aktualisierten Elements oder mehrerer aktualisierter Elemente (207).

3. Verfahren gemäß Anspruch 1, wobei die aktualisierbaren Elemente (207) Datenelemente (207) aufweisen und der Schritt der Aktualisierung der aktualisierbaren Bereiche (205) des angezeigten graphischen Elements (202) eine Eingabe der Datenelemente (207) in die entsprechenden aktualisierbaren Bereiche (205) aufweist.

4. Verfahren gemäß einem vorhergehenden Anspruch, wobei:
die Daten weiter zumindest einen Satz von alternativen graphischen Teilelementen (503) aufweisen;
die aktualisierbaren Elemente (516, 517a, b) eine oder mehrere Teilelement-Anweisung(en) (517a) aufweisen, die zumindest ein graphisches Teilelement aus dem oder einem des zumindest einen Satzes von alternativen graphischen Teilelementen (513) identifiziert/identifizieren, die in einem Bereich des graphischen Elements (502) angezeigt werden; und
der Schritt der Aktualisierung der aktualisierbaren Bereiche (505) des angezeigten graphischen Elements (502) ein Anzeigen des oder jeden geeigneten Teilelements (513) in dem oder jedem entsprechenden Bereich des angezeigten graphischen Elements (502) gemäß den aktualisierten Teilelementanweisungen (517a) aufweist.

5. System zum Übertragen von Daten über eine Kommunikationsverbindung oder ein Netzwerk, wobei das System eine erste Vorrichtung (101, 105) und eine zweite Vorrichtung (109a-e) aufweist, die durch die Kommunikationsverbindung oder das Netzwerk (107) miteinander verbunden sind, wobei die Daten aufweisen:
ein graphisches Element (202) mit einem oder mehreren aktualisierbaren Bereich(en) (205); und
ein oder mehrere aktualisierbare(s) Element(e) (207), das/die den aktualisierbaren Bereichen (205) entspricht/entsprechen;
wobei die erste Vorrichtung (101, 105) aufweist:
Mittel, die betriebsfähig sind, als Antwort auf eine Anforderung von der zweiten Vorrichtung (109a-e) an die zweite Vorrichtung das graphische Element (202), zumindest ein aktualisierbares Element (207) und ein Steuerungsprogramm (209) zum Steuern der Aktualisierung der aktualisierbaren Bereiche (205) des graphischen Elements (202), wenn angezeigt, unter Verwendung der aktualisierbaren Elemente zu übertragen; und
Mittel, die betriebsfähig sind, weiter ein oder mehrere aktualisierte(s) Element(e) (207) an die zweite Vorrichtung (109a-e) zu übertragen,
wobei die zweite Vorrichtung (109a-e) aufweist:
Mittel, die betriebsfähig sind, Daten von der ersten Vorrichtung (101, 105) anzufordern;
Mittel, die betriebsfähig sind, Daten von der ersten Vorrichtung (101, 105) zu empfangen und das graphische Element (202) anzuzeigen unter Verwendung der aktualisierbaren Elemente (207);
Mittel, die betriebsfähig sind, ein oder mehrere aktualisierte(s) Element(e) (207) zu empfangen; und
Mittel, die betriebsfähig sind, unter der Steuerung des Steuerungsprogramms (209) die aktualisierbaren Bereiche (205) des graphischen Elements (202), wenn angezeigt, unter Verwendung der aktualisierten Elemente (207) zu aktualisieren.

6. System gemäß Anspruch 5, wobei die aktualisierbaren Elemente (207) Datenelemente (207) aufweisen, und das Aktualisierungsmittel, das betriebsfähig ist, die aktualisierbaren Bereiche (205) zu aktualisieren, Mittel aufweist zur Eingabe der Datenelemente in die entsprechenden aktualisierbaren Bereiche.

7. System gemäß Anspruch 5 oder 6, wobei:
die Daten weiter zumindest einen Satz von alternativen graphischen Teilelementen (503) aufweisen;
die aktualisierbaren Elemente (516, 517a, b) eine oder mehrere Teilelement-Anweisung(en) (517a) aufweisen, die zumindest ein graphisches Teilelement (503) aus dem oder einem des zumindest einen Satzes von alternativen graphischen Teilelementen (503) identifiziert/identifizieren, die in einem Bereich des graphischen Elements (502) angezeigt werden; und
das Aktualisierungsmittel, das betriebsfähig ist, die aktualisierbaren Bereiche (505) zu aktualisieren, Mittel aufweist zur Anzeige des oder jeden geeigneten Teilelements (503) in dem entsprechenden Bereich (505) des angezeigten graphischen Elements (502) gemäß den aktualisierten Teilelementanweisungen (517a).

8. Client-Vorrichtung (109a-e) zum Akquirieren von Daten von einer Datenquelle (101, 105) über eine Kommunikationsverbindung oder ein Netzwerk (107), wobei die Daten aufweisen:
ein graphisches Element (202) mit einem oder mehreren aktualisierbaren Bereich(en) (205); und
ein oder mehrere aktualisierbare(s) Element(e) (207), das/die den aktualisierbaren Bereichen (205) entspricht/ entsprechen;
wobei die Client-Vorrichtung (109a-e) aufweist:
Mittel zum Anfordern der Daten von der Datenquelle (101, 105); Mittel zum Empfangen des graphischen Elements (202), zumindest eines aktualisierbaren Elements (207) und eines Steuerungsprogramms (209) zum Steuern der Aktualisierung der aktualisierbaren Bereiche (205) des graphischen Elements (202), wenn angezeigt;
Mittel zum Anzeigen des graphischen Elements (202);
Mittel zum Akquirieren eines aktualisierten Elements oder mehrerer aktualisierter Elemente (207); und
Aktualisierungsmittel, um unter Steuerung des Steuerungsprogramms (209) die aktualisierbaren Bereiche (205) des angezeigten graphischen Elements (202) unter Verwendung der entsprechenden aktualisierten Elemente (207) zu aktualisieren.

9. Datenserver-Vorrichtung (101, 105) zum Liefern von Daten von einer Datenquelle (101, 105) an eine Zielvorrichtung (109a-e) über eine Kommunikationsverbindung oder ein Netzwerk (107),
wobei die Daten aufweisen:
ein graphisches Element (202) mit einem oder mehreren aktualisierbaren Bereich(en) (205); und
ein oder mehrere aktualisierbare(s) Element(e) (207), das/die den aktualisierbaren Bereichen (205) entspricht/ entsprechen;
wobei die Datenserver-Vorrichtung (101, 105) aufweist:
Übertragungsmittel, um als Antwort auf eine Anforderung für Daten von der Zielvorrichtung (109a-e) das graphische Element (202), zumindest ein aktualisierbares Element (207) und ein Steuerungsprogramm (209) zum Steuern der Aktualisierung der aktualisierbaren Bereiche des graphischen Elements (202), wenn angezeigt, unter Verwendung der aktualisierbaren Elemente zu aktualisieren; wobei
das Übertragungsmittel weiter betriebsfähig ist, ein oder mehrere aktualisierte(s) Element(e) (207) zu übertragen.

10. Speichermedium, das einen Computer-lesbaren Code aufweist, der Anweisungen darstellt, um einen Computer zu veranlassen, das in den Ansprüchen 1 bis 4 definierte Verfahren durchzuführen, wenn die Anweisungen von dem Computer ausgeführt werden.

11. Computerdatensignal, das in einer Trägerwelle aufgenommen ist und Anweisungen darstellt, um einen Computer zu veranlassen, das in den Ansprüchen 1 bis 4 definierte Verfahren durchzuführen, wenn die Anweisungen von dem Computer ausgeführt werden.

## Revendications

1. Procédé d'acquisition de données à partir d'une source de données (101, 105) sur une liaison de communication ou un réseau (107), les données comprenant :
un élément graphique (202) comportant une ou plusieurs zones pouvant être mises à jour (205), et
un ou plusieurs éléments pouvant être mis à jour (207) correspondant aux zones pouvant être mises à jour (205),
ledit procédé comprenant les étapes consistant à :
demander les données auprès de la source de données (101, 105),
recevoir l'élément graphique (202), au moins un élément pouvant être mis à jour (207) et un programme de commande (209) de commande d' une mise à jour des zones pouvant être mises à jour (205) de l'élément graphique (202) lorsqu'il est affiché,
afficher l'élément graphique (202),
acquérir un ou plusieurs éléments mis à jour (207), et
sous la commande du programme de commande (20.9), mettre à jour les zones pouvant être mises à jour (205) de l'élément graphique affiché (202) en utilisant les éléments mis à jour correspondants (207).

2. Procédé de fourniture de données à partir d'une source de données (101, 105) à un dispositif de destination (109a à e) sur une liaison de communication ou un réseau (107), lesdites données comprenant :
un élément graphique (202) comportant une ou plusieurs zones pouvant être mises à jour (205), et
un ou plusieurs éléments pouvant être mis à jour (207) correspondant aux zones pouvant être mises à jour (205),
ledit procédé comprenant les étapes consistant à :
en réponse à une demande pour des données provenant du dispositif de destination (109a à e), transmettre l'élément graphique (202), au moins un élément pouvant être mis à jour (207) et un programme de commande (209) destiné à commander la mise à jour des zones pouvant être mises à jour (205) de l'élément graphique lorsqu'il est affiché, en utilisant les éléments pouvant être mis à jour, et
transmettre un ou plusieurs éléments mis à jour (207).

3. Procédé selon la revendication 1, dans lequel les éléments pouvant être mis à jour (207) comprennent des éléments de données (207), et l'étape de mise à jour des zones pouvant être mises à jour (205) des éléments graphiques affichés (202) comprend le fait d'entrer les éléments de données (207) dans les zones pouvant être mises à jour correspondantes (205).

4. Procédé selon l'une quelconque des revendications précédentes, où :
les données comprennent en outre au moins un ensemble d'autres sous-éléments graphiques (503),
les éléments pouvant être mis à jour (516, 517a, b) comprennent une ou plusieurs instructions de sous-éléments (517a) identifiant au moins un sous-élément graphique, à partir du ou de l'un du au moins un ensemble d'autres sous-éléments graphiques (513), à afficher dans une zone de l'élément graphique (502), et
l'étape de mise à jour des zones pouvant être mises à jour (505) de l'élément graphique affiché (502) comprend l'affichage, conformément aux instructions de sous-éléments mis à jour (517a), du ou de chaque sous-élément graphique approprié (513) dans la ou chaque zone correspondante de l'élément graphique affiché (502).

5. Système de transmission de données sur une liaison de communication ou un réseau, le système comprenant un premier dispositif (101, 105) et un second dispositif (109a à e) interconnectés par la liaison de communication ou le réseau (107), lesdites données comprenant :
un élément graphique (202) comportant une ou plusieurs zones pouvant être mises à jour (205), et
un ou plusieurs éléments pouvant être mis à jour (207) correspondant aux zones pouvant être mises à jour (205),
ledit premier dispositif (101, 105) comprenant
un moyen pouvant être mis en oeuvre en réponse à une demande provenant du second dispositif (109a à e) pour transmettre au second dispositif l'élément graphique (202), au moins un élément pouvant être mis à jour (207) et un programme de commande (209) destiné à commander la mise à jour des zones pouvant être mises à jour (205) de l'élément graphique lorsqu'il est affiché, en utilisant des éléments pouvant être mis à jour (207), et
un moyen pouvant être mis en oeuvre pour en outre transmettre un ou plusieurs éléments mis à jour (207) au second dispositif (109a à e),
ledit second dispositif (109a à e) comprenant :
un moyen pouvant être mis en oeuvre pour demander des données auprès du premier dispositif (101, 105),
un moyen pouvant être mis en oeuvre pour recevoir des données du premier dispositif (101, 105) et pour afficher l'élément graphique (202) en utilisant les éléments pouvant être mis à jour (207),
un moyen pouvant être mis en oeuvre pour recevoir un ou plusieurs éléments mis à jour (207), et
un moyen pouvant être mis en oeuvre, sous la commande du programme de commande (209), pour mettre à jour les zones pouvant être mises à jour (205) de l'élément graphique (202) lorsqu'il est affiché, en utilisant les éléments mis à jour (207).

6. Système selon la revendication 5, où les éléments pouvant être mis à jour (207) comprennent des éléments de données (207), et le moyen de mise à jour, pouvant être mis en oeuvre pour mettre à jour les zones pouvant être mises à jour (205), comprend un moyen d'entrée des éléments de données dans les zones pouvant être mises à jour correspondantes.

7. Système selon la revendication 5 ou 6, où :
les données comprennent en outre au moins un ensemble d'autres sous-éléments graphiques (503),
les éléments pouvant être mis à jour (516, 517a, b) comprennent une ou plusieurs instructions de sous-éléments (517a) identifiant au moins un sous-élément graphique (503), à partir du ou de l'un du au moins un ensemble d'autres sous-éléments graphiques (503), à afficher dans une zone de l'élément graphique, et
le moyen de mise à jour pouvant être mis en oeuvre pour mettre à jour les zones pouvant être mises à jour (505) comprend un moyen d'affichage, conformément aux instructions de sous-éléments mis à jour (517a), du ou de chaque sous-élément graphique approprié (503) dans la zone correspondante (505) de l'élément graphique affiché (502).

8. Dispositif client (109a à e) d'acquisition de données à partir d'une source de données (101, 105) sur une liaison de communication ou un réseau (107), lesdites données comprenant :
un élément graphique (202) comportant une ou plusieurs zones pouvant être mises à jour (205), et
un ou plusieurs éléments pouvant être mis à jour (207) correspondant aux zones pouvant être mises à jour (205),
ledit dispositif client (109a à e) comprenant :
un moyen de requête des données auprès de la source de données (101, 105),
un moyen de réception de l'élément graphique (202), au moins un élément pouvant être mis à jour (207) et un programme de commande (209) destiné à commander la mise à jour des zones pouvant être mises à jour (205) de l'élément graphique (202) lorsqu'il est affiché,
un moyen d'affichage de l'élément graphique (202),
un moyen d'acquisition d'un ou plusieurs éléments mis à jour (207), et
un moyen de mise à jour destiné, sous la commande du programme de commande (208), à mettre à jour les zones pouvant être mises à jour (205) de l'élément graphique affiché (202) en utilisant les éléments mis à jour correspondants (207).

9. Dispositif de serveur de données (101, 105) destiné à procurer des données provenant d'une source de données (101, 105) à un dispositif de destination (109a à e) sur une liaison de communication ou un réseau (107), lesdites données comprenant :
un élément graphique (202) comportant une ou plusieurs zones pouvant être mises à jour (205), et
un ou plusieurs éléments pouvant être mis à jour (207) correspondant aux zones pouvant être mises à jour, ledit dispositif de serveur de données (101, 105) comprenant :
un moyen de transmission destiné, en réponse à une demande de données provenant du dispositif de destination (109a à e), à transmettre l'élément graphique (202), au moins un élément pouvant être mis à jour (207) et un programme de commande (209) destiné à commander la mise à jour des zones pouvant être mises à jour de l'élément graphique lorsqu'il est affiché, en utilisant des éléments pouvant être mis à jour, où
le moyen de transmission peut en outre être mis à jour pour transmettre un ou plusieurs éléments mis à jour (207).

10. Support de mémorisation portant un code lisible par un ordinateur représentant des instructions destinées à amener un ordinateur à exécuter le procédé défini dans l'une quelconque des revendications 1 à 4, lorsque les instructions sont exécutées par l'ordinateur.

11. Signal de données informatiques incorporé dans une onde porteuse et représentant des instructions destinées à amener un ordinateur à exécuter le procédé défini dans l'une quelconque des revendications 1 à 4, lorsque les instructions sont exécutées par l'ordinateur.
